# DEMANDE DE BREVET EUROPEEN

(11) **EP 2 192 531 A1**
(43) Date de publication de la demande: **02.06.2010**
(21) Numéro de dépôt: 08305858.6
(22) Date de dépôt: 27.11.2008
(51) Int. Cl.: G06K 19/077, H01Q 1/22, H01Q 7/00

(54) **Circuit électrique / électronique pour connecter un dispositif à une antenne radiofréquence**

(71) Demandeur: Gemalto SA, 92190 Meudon (FR)
(72) Inventeur: Schuh, Jean-François, 13600, LA CIOTAT (FR); Bonnet, Didier, 83330, LE BEAUSSET (FR)

(57) **Abrégé**

L'invention concerne un circuit électrique / électronique 1 comprenant des moyens de connexion externes comportant au moins un contact électrique fonctionnel (3, 4) et des moyens de liaison (5, 6) reliant ou destinés à relier un circuit radiofréquence (7),

Le circuit se distingue en ce que ledit contact fonctionnel (3, 4) constitue également un point de connexion destiné à connecter une antenne radiofréquence (11).

L'invention concerne également un dispositif comportant ledit circuit.

## Description

L'invention concerne le domaine des circuits pour dispositifs de communication radiofréquence.

Il concerne un circuit électrique / électronique comprenant des moyens de connexion externes comportant au moins un contact électrique fonctionnel du circuit et des moyens de liaison reliant ou destinés à relier un circuit radiofréquence.

Plus particulièrement, l'invention vise des dispositifs comportant une fonction USB et radiofréquence RF, notamment selon la norme ISO 14443, ISO 15693, UHF ou de type NFC (ISO 18092, ISO 21481, etc.).

Elle trouve application notamment au chargement de données par internet, notamment de droits d'accès, abonnements à des services tels que transport, téléphonie, par une interface à contacts électriques et utilisation de ces données dans un mode radiofréquence en relation avec des bornes radiofréquences ou inversement.

De tels dispositifs sont connus parmi notamment des clés USB qui embarquent une fonction radiofréquence RF pour des applications de contrôle d'accès. Bien que décrit en relation avec l'USB, l'invention s'applique à tout dispositif de communication à contacts électriques notamment contacts linéaires tels que décrits dans les standards ou normes MMC, SD, Express card, ou ISO 7816 ou autre. Dans tout le document, par simplification, le terme USB signifie également tout autre standard ou protocole de communication différent d'USB.

On connait des modules ou des cartes comportant une puce duale ISO 7816 et RF (ISO 14433) et comportant des plages de contact ISO 7816 dont deux contacts en position C4, C8 sont non fonctionnels pour la fonction à contact ISO 7816 de la carte à puce mais sont éventuellement fonctionnels et utilisables pour connecter une antenne radiofréquence.

La capacité à télé-alimenter à travers l'antenne la puce radiofréquence (RFID) va dépendre de la surface de l'antenne, il est donc souhaitable d'avoir un dispositif USB d'une grande surface, ce qui est en contradiction avec l'usage classique des dispositifs USB qui sont en général petits. Ces dispositifs USB auront donc une efficacité ou portée assez réduite de l'ordre de quelques centimètres, l'antenne ayant une surface de couplage au plus égale à la surface ou encombrement de la clé, généralement 2 à 3 cm2.

Par ailleurs, d'une manière générale, il est avantageux d'être en mesure de prévoir des moyens permettant une migration d'une communication à contact tel que USB vers d'autres moyens de communication radiofréquence avec un même dispositif de base; Il est également avantageux de permettre plusieurs communications sur un seul connecteur en même temps ou non, pour des raisons notamment de simplicité, souplesse d'utilisation, d'économie de connecteur ou pour limiter les contacts débouchant à l'extérieur d'un dispositif.

L'invention vise à résoudre les inconvénients précités ou satisfaire les besoins exprimés ci-dessus.

En particulier, elle vise à améliorer la portée et la qualité de communication de dispositif radiofréquence tout en ayant un encombrement réduit pour une utilisation avec un équipement.

Le principe de l'invention consiste à utiliser un contact externe d'un connecteur électrique d'un premier circuit électrique et/ou électronique pour connecter une antenne radiofréquence à un second circuit RF.
Le circuit comprend de préférence, mais pas nécessairement, des moyens de protection électrique et/ou de sélection du premier circuit et/ou du circuit radiofréquence. Autrement dit, l'invention prévoit de préférence des moyens d'adaptation ou de sélection ou d'isolement électrique des circuits de manière à pouvoir connecter l'antenne sur un connecteur existant externe utilisé par d'autre(s) circuit(s) pas nécessairement compatible(s) ou fragile(s).

L'adaptation peut prévoir notamment des moyens de protection de circuits divers reliés au connecteur n'ayant pas les mêmes caractéristiques électriques qu'un circuit radiofréquence. L'énergie radiofréquence pour un circuit RF pouvant être assez forte, il convient de protéger l'autre circuit éventuel notamment si une utilisation ultérieure de ce dernier est envisagée.

Inversement, les moyens de protection ou d'isolement peuvent concerner uniquement le circuit RF; C'est notamment le cas d'une migration d'un mode de communication dans lequel on n'envisage plus d'utiliser les ou l'autre circuits divers relié(s) au connecteur.

En second lieu, l'invention prévoit également de déporter ou d'avoir l'antenne du dispositif RF en dehors d'un ou plusieurs circuits électroniques ou plaques de circuits imprimés (PCB), de manière de réduire des interférences ou perturbations avec des parties conductrices d'un circuit. L'antenne est positionnée par rapport à ce circuit de manière à avoir une surface de couplage qui soit le moins possible en regard du circuit imprimé.

Autrement dit, le dispositif comporte une première configuration fonctionnelle de communication radiofréquence dans laquelle l'antenne (notamment en forme de spires) présente au moins une portion de surface de couplage (à l'intérieur de la spire la plus large) dépourvue de circuit électronique directement en regard.

D'autre part, en mode d'utilisation à contact électrique (USB), le dispositif comprend, une configuration fonctionnelle dans laquelle l'encombrement est réduit ou du moins, ne gêne pas sa connexion ou une autre connexion de clés USB aux autres ports ou connecteurs d'ordinateur.

A cet effet, l'invention a pour objet un circuit électrique / électronique comprenant des moyens de connexion externes comportant au moins un contact électrique fonctionnel et des moyens de liaison reliant ou destinés à relier un circuit radiofréquence; Il se distingue en ce que ledit contact fonctionnel constitue également un point de connexion destiné à connecter une antenne radiofréquence.

Selon d'autres caractéristiques, le circuit :
- comprend des moyens de protection électrique du circuit et/ou du circuit radiofréquence;
- lesdits moyens de protection comportent une self de choc placée entre ledit contact et le circuit électrique/électronique et/ou une capacité placée entre ledit contact et le point de liaison du circuit radiofréquence;
- lesdits moyens de protection comportent un commutateur apte à commuter une connexion du contact électrique soit avec le circuit radiofréquence, soit avec le circuit électrique/électronique.

L'invention a également pour objet un dispositif et/ou système comportant le circuit ci-dessus. Ce dispositif comporte des pistes d'un connecteur USB, l'antenne étant logée dans un capuchon amovible apte à connecter les deux extrémités d'antenne aux pistes respectivement. Le dispositif comprend une carte à puce ou composant externe contenant ledit circuit radiofréquence et connecté audit point de liaison. L'antenne est logée dans un accessoire portable d'un utilisateur tel que vêtement, sac, portefeuille, téléphone, ordinateur, capuchon.

Grâce à ces dispositions, le dispositif USB présente à la fois un aspect compact, une configuration de protection électrique des circuits et une position fonctionnelle optimale de couplage électromagnétique;

D'autres particularités et avantages de l'invention apparaîtront à la lecture de la description, faite à titre d'exemple non limitatif et en regard des dessins annexés sur lesquels :
- La figure 1 illustre schématiquement un circuit conforme à un premier mode de réalisation de l'invention;
- Les figures 2 et 3 illustrent schématiquement le fonctionnement du circuit de la figure 1;
- La figure 4 illustre schématiquement le circuit conforme à un second mode de réalisation de l'invention avec commutateur;
- La figure 5 illustre schématiquement la structure d'un dispositif portable conforme à l'invention selon un troisième mode de réalisation avec des moyens amovibles permettant d'escamoter ou insérer le corps par rapport à l'antenne;
- La figure 6 illustre un sac contenant le dispositif de l'invention.

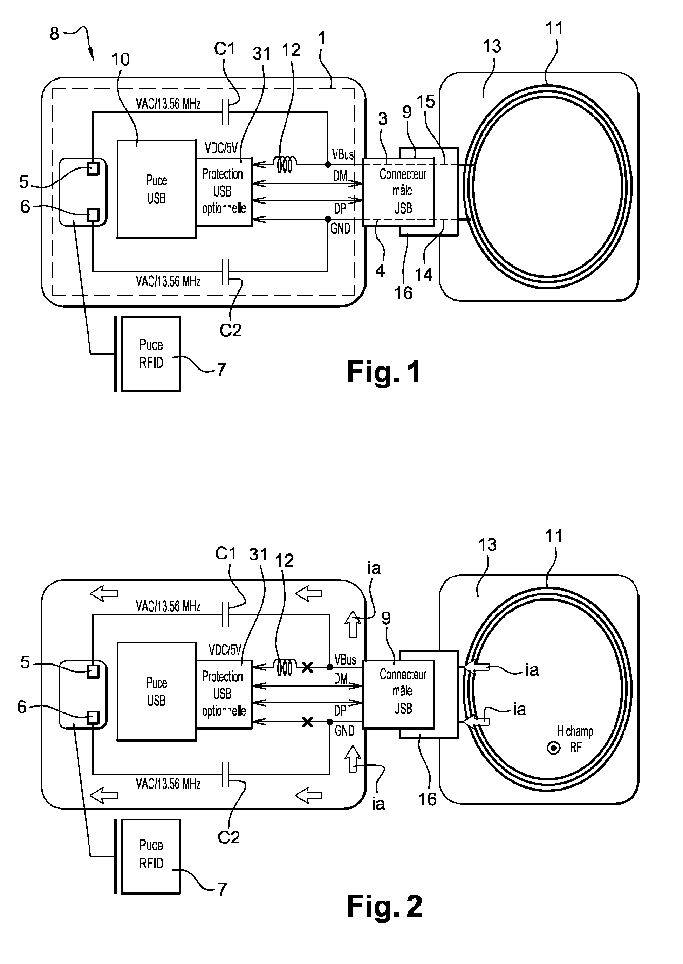

A la figure 1, un circuit électrique / électronique 1 conforme à un mode de réalisation, comprend des moyens de connexion externes 9 comportant au moins un contact électrique fonctionnel 3, 4 et des moyens de liaison 5, 6 reliant ou destinés à relier un circuit radiofréquence (7);

Conformément à une caractéristique, le contact fonctionnel constitue également un point de connexion destiné à connecter une antenne radiofréquence 11

Le circuit électrique et/ou électronique peut représenter un dispositif quelconque. Il peut être tout autre objet comme une lampe, une souris d'ordinateur, une batterie rechargeable et sans chargeur, un lecteur de carte mémoire, un lecteur MP3, etc. Dans l'exemple de la figure 1, le circuit comprend une puce USB qui peut éventuellement déjà comporter en série un circuit de protection 31 (notamment ferrites, selfs de mode commun, écrêteurs de tension).

Dans un exemple d'utilisation de la clé USB, on prévoit une migration d'une communication USB à une communication radiofréquence, la clé USB ne comportant pas nécessairement la puce RF déjà connectée, mais comporte des connexions 5, 6 prévues pour connecter la puce RF ou une carte à puce RF ultérieurement. On verra par la suite dans la description comment le dispositif permet cette migration.

Dans un autre exemple d'utilisation, on prévoit un dispositif permettant de choisir un type de fonctionnement parmi deux; par exemple, une clé USB comporte d'office d'une part, un premier connecteur ou plots de raccordement à un composant USB tel une puce, module ou carte à puce USB amovible et d'autre part un connecteur ou plots de raccordement à un composant RF tel une puce RF, module RF ou carte à puce de type radiofréquence (RF). En optant pour une utilisation USB, l'utilisateur installe le composant USB au dispositif et dans un autre choix d'utilisation, l'utilisateur installe le composant RF au dispositif et connecte en outre une antenne RF via le connecteur USB externe.

De cette manière selon le besoin, on peut disposer d'une fonction USB ou d'une fonction RF optimisée puisque l'antenne est décalée de l'électronique du dispositif et présente une forme et exposition au champ radiofréquence optimisées.

Selon une caractéristique de l'invention, au moins un contact fonctionnel 3, 4 constitue également un point de connexion à une antenne radiofréquence 11. L'antenne est disposée dans un capuchon 13 venant s'emboîter dans le connecteur USB du dispositif. L'antenne est apte à capter un champ électromagnétique et induire du courant alternatif dans le fil d'antenne. Dans une variante de réalisation, l'antenne peut être sous forme d'un seul fil ou de type UHF si une antenne de champ électrique est requise.

Ainsi, dans le cas d'une migration, l'invention permet une évolution ou une adaptation très pratique puisqu'il suffit juste de connecter une puce RF sur les contacts 5, 6 et de brancher une antenne appropriée sur le connecteur USB.

A l'intérieur du dispositif, le circuit électronique et/ou électrique 1 peut, le cas échéant, avoir une liaison de communication avec le circuit radiofréquence RF ou NFC notamment du type SWP (single wire protocol en terminologie anglo saxonne. Selon une variante de réalisation, les deux circuits ou puces RF et USB peuvent faire l'objet d'un seul composant intégré ou résultant d'un assemblage de puces.

Le circuit USB peut le cas échéant, comprendre une fonction de lecteur d'une puce combi RF/ISO, les points de connexion étant reliés aux plages C4 C8 d'un module combi.

Selon une caractéristique de l'invention, le circuit 1 comprend des moyens de protection électrique dudit circuit électrique/électronique et/ou du circuit radiofréquence; le ou les contact(s) 3, 4 constitue(nt) également un point (ou des points) de connexion à l'antenne radiofréquence 11. Ces dispositions permettent, par exemple, de préserver le circuit initial 10 au cas où il serait fragile par rapport aux courants induits, afin de l'utiliser à nouveau.

Dans l'exemple illustré, conformément à un mode de réalisation, les moyens de protection comportent au moins une self de choc 12; Elle est placée, pour protéger le circuit 10, entre ledit contact 3 et/ou 4 et le circuit électrique/électronique 10; Les moyens de protection comportent alternativement ou cumulativement au moins une capacité C1 placée par exemple entre ledit contact 3 et un des points de liaison 5 ou 6 du circuit radiofréquence.

Dans l'exemple de réalisation préféré, le circuit comporte deux capacités (C1, C2) disposées respectivement entre un point de liaison (5, 6) du circuit radiofréquence et un contact correspondant (3, 4) du connecteur USB; Le circuit de protection du circuit USB est quant à lui constitué d'une self de choc 12 voire deux selfs de choc réparties sur chaque point d'entrée du circuit 10 et destinée(s) à filtrer ou stopper le signal RF.

Comme mentionné précédemment, un seul des deux circuits 10 ou 7 peut être protégé par l'élément approprié selon par exemple, qu'il y ait ou non une réutilisation ultérieure.

Le contact 3 correspond ici au Vbus du composant USB mais selon d'autres modes de réalisation, il pourrait être un quelconque contact parmi d'autres contacts.

L'antenne 11 est connectée sur le connecteur USB (9) du dispositif 8; A cet effet, l'antenne est portée par un capuchon 13 ou autre accessoire et comporte ses extrémités 14, 15 reliées à un connecteur apte à connecter le connecteur USB du circuit 10. Dans l'exemple, le connecteur 16 est un connecteur femelle USB dont seules des pistes 14, 15 correspondant au "Vbus" et "GND" sont connectées à l'antenne.

Grâce à cette configuration, l'antenne peut être de grande dimension, bien exposée au champ électromagnétique et sans perturbation causée généralement par des éléments de circuit du dispositif, puisqu'ils sont hors du champ direct couvert par l'antenne.

A la figures 2, lorsque le dispositif est connecté à une antenne comme précédemment, le champ radiofréquence, par exemple d'une station de contrôle d'accès, est capté par l'antenne 11 et un courant alternatif correspondant est induit dans le fil d'antenne. Le courant emprunte un chemin électrique représenté par les flèches (ia). Le courant passe par le connecteur, se trouve bloqué par la self de choc 12 et s'achemine vers les points de connexion 5, 6 du circuit radiofréquence 7 qui lui est connecté. Ici une puce radiofréquence RF est directement connectée par soudage aux deux points de liaison 5, 6. Toutefois, la puce pourrait être conditionnée dans un composant standard et soudée par des pattes à ces points 5, 6. Selon un autre mode, le circuit électronique RF peut être conditionné dans une carte à puce ou autre composant est placée au contact de ces points. Le courant alternatif est retransmis par les capacités au circuit RF.

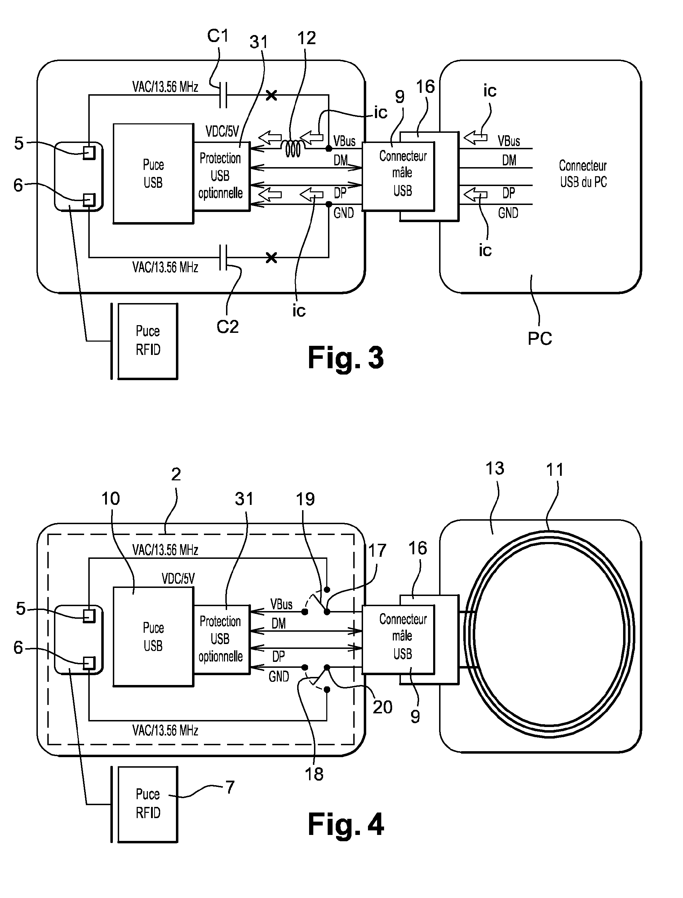

A la figure 3, le capuchon 13 du dispositif ou associé au dispositif 8 a été retiré et le circuit 1 est connecté à un terminal PC de manière à télécharger des droits par internet de manière à passer un contrôle d'accès mis en oeuvre par la station visée précédemment. Pour cela, le dispositif est enfiché dans un port USB 16 correspondant du PC.

Les capacités C1, C2 bloquent le courant en direction du circuit radiofréquence RF, et protègent le circuit contre l'alimentation du terminal en courant continu. Par contre, la self de choc 12 ne produisant aucun effet sur le courant continu du terminal, le circuit USB 10 est alimenté normalement conformément aux flèches (Ic).

A la figure 4, conformément à un second mode de réalisation, un circuit 2 comprend comme précédemment les mêmes composants que ceux référencés de manière identique aux figures précédentes. Ce circuit 2 comprend en outre des moyens de protection sous forme d'un ou des commutateurs 17, 18 ou équivalent(s) apte(nt) à commuter une connexion du contact électrique 3, 4 soit avec le circuit radiofréquence RF présent ou non, soit avec le circuit électrique/électronique 10 présent ou non.

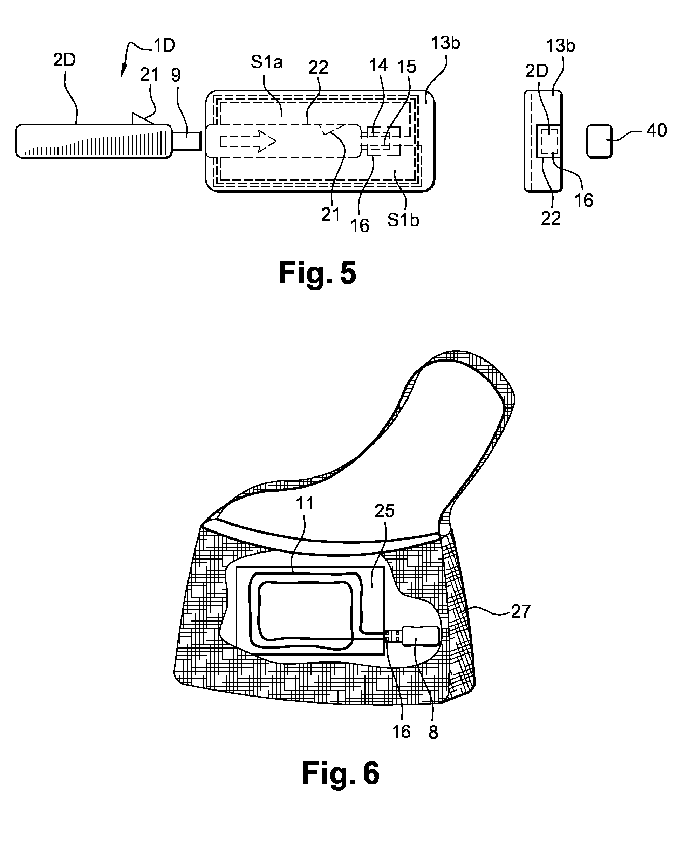

Le commutateur peut être placé par exemple sur la figure 4, en amont du connecteur USB sur les jonctions 19, 20 entre le Vbus et/ou GND et les points de connexion 5, 6 du circuit RF; Le commutateur peut commuter d'une position à l'autre de manière manuelle par un bouton 21 (fig. 5) débouchant en surface du dispositif 2D actionnable de l'extérieur par l'utilisateur. Le commutateur peut aussi commuter de manière automatique par détection d'une caractéristique de fonctionnement électrique ou physique, par exemple le champ électromagnétique ou tension / courant de la connexion USB. Un détecteur adéquat (non représenté) de cette caractéristique peut être prévu à cet effet.

Le cas échéant, le simple fait de connecter l'antenne actionne le commutateur. Le capuchon peut comprendre à cet effet un moyen d'actionnement 21 coopérant le circuit électrique et/ou électronique 2 pour faire basculer le commutateur. Par exemple, dans le mode de réalisation ci-dessous à la figure 5, le capuchon 13b recevant le dispositif 1 D dans un fourreau 22, actionne un commutateur dont un bouton 21 débouche en surface.

Selon une variante (non représentée), le capuchon peut comprendre des excroissances parallèles au connecteur 16 qui pénètrent dans des ouvertures du dispositif sur sa face avant portant le connecteur 4 lors de la connexion et qui déplacent mécaniquement un commutateur ou équivalent pour sélectionner un des circuits 10 ou 7 dans le dispositif.

Selon une autre utilisation et configuration du dispositif, les moyens de protection peuvent permettre une connexion double du dispositif à une antenne et à un terminal via un double connecteur USB (hub en anglais). Ainsi, les deux circuits peuvent fonctionner en même temps comme dans le cas de la figure 1 ou alternativement sans avoir à retirer le capuchon, simplement en effectuant une commutation avec un commutateur comme celui du mode de réalisation illustré à la figure 3.

Les signaux relatifs aux deux types d'alimentation peuvent être superposés et filtrés ou bloqués par les moyens de protection adéquats

A la figure 5, les mêmes numéros de référence représentant les mêmes éléments que les figures précédentes. Le dispositif selon un autre mode de réalisation comporte des moyens amovibles permettant d'escamoter complètement le corps 2D dit principal ou du moins le circuit électronique interne, dans la mesure où il se loge à l'intérieur d'un capuchon 13b ou dessus.

Dans l'exemple, l'antenne est logée dans un capuchon amovible (13b), qui est apte à connecter les deux extrémités d'antenne au connecteur du dispositif; Le capuchon 13b présente un logement ou espace de réception 22 permettant de fixer ou recevoir le corps principal 2D contenant le circuit électronique et le connecter.

Au fond de cet espace 22 se trouvent des points de connexion 14, 15 ou un connecteur adapté à connecter un ou des composants électroniques réalisant la fonction de communication radiofréquence dans le corps 2D.

Le capuchon 13b présente une surface totale S1 qui est largement supérieure à celle du corps 2D; Lorsque le corps est fixé au capuchon ou support d'antenne 13b ou reçu à l'intérieur, l'antenne présente des portions S1 a et S1b qui ne sont pas directement en regard du corps et sont donc bien exposées au champ électromagnétique d'une borne externe de lecture. Un obturateur éventuel 40 ferme cet espace de réception 22.

Grâce à ces dispositions, le dispositif est pratique à emporter en un seul bloc dans sa configuration assemblée et à glisser dans un sac ou autre pour réaliser un contrôle d'accès.

La surface de couplage de l'antenne est calculée en fonction de l'encombrement du corps de manière à avoir la portée requise. En outre, lorsqu'il s'agit de se connecter à internet via un port d'ordinateur, il suffit d'extraire le corps 2D de l'étui 13d, ici une clé USB, pour retrouver un corps plus étroit ou fin et le connecter au port USB et réaliser une communication USB sans gêner d'autres connexions.

Le cas échéant, différents capuchons de tailles et portées différentes peuvent être choisis selon le besoin de l'utilisateur, par exemple, selon le placement du dispositif sur lui, dans un sac et la manière à le présenter à un lecteur. L'invention permet donc du fait de la fonction amovible de l'antenne une personnalisation du dispositif radiofréquence selon la portée requise.

Le dispositif comprend une certaine surface "S1a" ou encombrement en vue de dessus (ou par exemple, en section parallèle au plan d'un connecteur éventuel 4); Le corps support de préhension 2D, ici une coque externe, comprend un circuit électronique (non visible) qui s'étend à l'intérieur, le cas échéant, le corps peut être directement une plaque de circuit imprimé (PCB) ou plaque support d'un circuit électronique quelconque.

D'une manière générale, le circuit 2 de l'invention peut comprendre notamment des pistes conductrices, des connexions et/ou des composants électroniques et/ou électriques tels qu'un bloc de connecteurs à lames élastiques ou autres. Le dispositif peut comprendre des composants pour réaliser une fonction USB, une fonction radiofréquence, éventuellement disposés dans une carte distincte. Ces éléments de circuits sont susceptibles de perturber la communication radiofréquence établie à l'aide d'au moins une spire d'antenne radiofréquence 11 qui est disposée en décalé du circuit électronique.

La spire d'antenne 11 définit une surface de couplage électromagnétique "S2" à l'intérieur de la spire.

Conformément à une caractéristique, l'antenne 11 présente au moins une portion de surface de couplage S2 = S1a + S1b, qui est libre de tout circuit électronique et/ou pistes conductrices disposés directement en regard ou sensiblement en regard du dispositif 2D quand il est disposé à l'intérieur du capuchon 13b.

A la figure 6, on voit que l'antenne 11 peut être logée dans un accessoire portable 27 d'un utilisateur tel que vêtement, sac, portefeuille, téléphone, ordinateur; Ici, l'antenne 11 est portée par un support 25 tel une feuille cartonnée munie d'un connecteur 16, par exemple un connecteur femelle USB.

Dans l'exemple, la feuille est intégrée ou glissée dans une poche du sac 27 et une clé USB représentant le dispositif 8 est connecté à l'antenne. Ce qui rend l'objet encore plus pratique à être utilisé.

Alternativement, l'antenne peut être cousue à un objet ou tissu. L'antenne 11 ou tout objet de l'invention sac, vêtement, etc., destiné à être associé au dispositif 8 de l'invention ou au circuit électrique et/ou électronique contenant un connecteur 3, 4, comporte un connecteur (de type male ou femelle USB) destiné à connecter un connecteur correspondant du dispositif.

## Revendications

1. Circuit électrique ou électronique 1 comprenant des moyens de connexion externes comportant au moins un contact électrique fonctionnel (3, 4) et des moyens de liaison (5, 6) reliant ou destinés à relier un circuit radiofréquence (7),
**caractérisé en ce que** ledit contact fonctionnel (3, 4) constitue également un point de connexion destiné à connecter une antenne radiofréquence (11).

2. Circuit selon la caractéristique précédente, **caractérisé en ce qu'**il comprend des moyens de protection électrique (C1, 12, 17) du circuit et/ou du circuit radiofréquence.

3. Circuit selon la revendication 2, **caractérisé en ce que** lesdits moyens de protection comportent une self de choc (12) placée après ledit contact (3, 4) et/ou une capacité placée entre ledit contact (3, 4) et le point de liaison (5, 6) du circuit radiofréquence (7).

4. Circuit selon la revendication 1, **caractérisé en ce que** lesdits moyens de protection comportent au moins un commutateur (17, 18) apte à établir une connexion exclusive dudit contact (3, 4) avec le circuit radiofréquence (11).

5. Circuit selon la revendication 4, **caractérisé en ce que** ledit commutateur commute de manière automatique par détection d'une caractéristique de fonctionnement ou par connexion de l'antenne.

6. Circuit selon l'une quelconque des revendications précédentes, **caractérisé en ce qu'**il forme un circuit électronique de type USB.

7. Circuit selon l'une des revendications précédentes, **caractérisé en ce qu'**il comporte deux capacités (C1, C2) disposées respectivement entre un point de liaison (5, 6) du circuit radiofréquence et un contact (3, 4) du connecteur USB et **en ce que** le circuit de protection du circuit USB comprend une self de choc (12) destinée à filtrer le signal radiofréquence RF.

8. Dispositif comportant le circuit selon l'une des revendications précédentes.

9. Dispositif selon la revendication précédente, comportant des pistes (3, 4) d'un connecteur USB, **caractérisé en ce que** l'antenne est logée dans un capuchon amovible (13b), ledit capuchon étant apte à connecter les deux extrémités d'antenne aux pistes (3, 4) respectivement.

10. Dispositif selon l'une quelconque des revendications 8 à 9, **caractérisé en ce qu'**il comprend une carte à puce ou composant externe contenant ledit circuit radiofréquence (11), ledit composant ou carte étant connecté audit point de liaison (5, 6).

11. Dispositif selon la revendication précédente, **caractérisé en ce que** l'antenne (11) est logée ou fixée dans un accessoire portable (27) d'un utilisateur tel que vêtement, sac, portefeuille, téléphone, ordinateur.

12. Dispositif selon la revendication précédente, **caractérisé en ce que** l'antenne (11) comporte un connecteur USB de type femelle pour connecter un connecteur de type male.
